# EUROPEAN PATENT APPLICATION

(11) **EP 4 447 166 A1**
(43) Date of publication of application: **16.10.2024**
(21) Application number: 23167929.1
(22) Date of filing: 14.04.2023
(51) Int. Cl.: H01M 4/62, H01M 4/04

(54) **ELECTRODE FORMULATION FOR DRY PROCESS**

(71) Applicant: Arkema, Inc., King of Prussia, PA 19406 (US)
(72) Inventor: FUKUYAMA, Takehiro, OSAKA, 562-0041 (JP)
(74) Representative: Arkema Patent

(57) **Abstract**

The present invention relates to a dry composition comprising at least on active material, at least one binder, optionally at least one conductive agent, characterized in that said composition further comprises carbon fibers a diameter greater than or equal to 100 nm and a length greater than or equal to 5 µm. The present invention also relates to a dry-coated electrode comprising said composition.

## Description

### Technical field

The present invention relates generally to the field of electrical energy storage in the lithium storage batteries of Li-ion type. More specifically, the invention relates to a composition for a dry-coated electrode for Li-ion battery. Another subject matter of the invention is a process for making an electrode using said composition. The invention also concerns the lithium-ion batteries manufactured by incorporating said electrode.

### Technical background of the invention

An elementary cell of a Li-ion storage battery or lithium battery comprises an anode (at discharge), and a cathode (likewise at discharge) generally made of a lithium insertion compound of metal oxide type, such as LiMn2O4, LiCoO2 or LiNiO2, between which is inserted an electrolyte which conducts lithium ions.

Rechargeable or secondary cells are more advantageous than primary (non-rechargeable) cells because the associated chemical reactions that take place at the positive and negative electrodes of the battery are reversible. The electrodes of secondary cells can be regenerated several times by applying an electrical charge. Many advanced electrode systems have been developed to store electrical charge. At the same time, much effort has been devoted to the development of electrolytes capable of improving the capabilities of electrochemical cells.

For their part, the electrodes generally comprise at least one current collector on which is deposited, in the form of a film, a composite material consisting of a so-called active material because it has an electrochemical activity with respect to lithium, a polymer which acts as a binder, plus one or more electronically conductive additives which are generally carbon black or acetylene black, and optionally a surfactant.

Binders are counted among the so-called inactive components because they do not directly contribute to the cell capacity. However, their key role in electrode processing and their considerable influence on the electrochemical performance of electrodes have been widely described. The main relevant physical and chemical properties of binders are the thermal stability, the chemical and electrochemical stability, tensile strength (strong adhesion and cohesion), and flexibility. The main objective of using a binder is to form stable networks of the solid components of the electrodes, i.e. the active materials and the conductive agents (cohesion). In addition, the binder must ensure close contact of the composite electrode to the current collector (adhesion).

Poly(vinylidene fluoride) (PVDF) is used binder in lithium-ion batteries because of its excellent electrochemical stability, good bonding capability and high adhesion to electrode materials and current collectors. PVDF can only be dissolved in certain organic solvents such as N-Methyl pyrrolidone (NMP), which is volatile, flammable, explosive, and highly toxic, leading to serious environment concern. Indeed, in the wet slurry process, active materials and binders are dispersed in a liquid solution. The liquid utilized are usually organic solvents or water. The dispersion is cast on a current collector then dried in a high temperature oven to produce an electrode. In this process, a high amount of energy is needed to dry out the liquid components of the slurry and organic solvents additionally produce harmful vapors which require special equipment to prevent free emission to the environment.

Compared to the conventional wet-suspension electrode manufacturing method, dry (solvent-free) manufacturing processes are simpler; these processes eliminate the emission of volatile organic compounds, and offer the possibility of manufacturing electrodes with higher thicknesses (>120µm), with a higher energy density of the final energy storage device. The change in production technology will have little impact on the active material of the electrodes, however, the polymer additives responsible for the mechanical integrity of the electrodes must be adapted to the new manufacturing conditions.

US 2019/0305316 discloses dry process electrode films including a microparticulate non-fibrillizable binder having certain particle sizes and a method to obtain a film flexible enough to handle for a roll to roll process by using fibrillizable binders. However, the fibrillizable binders require either an extra shearing in addition to dispersing the components. This consumes high energy and destructive against the active materials. It is also known from US 2020/0313193 dry-process electrode films including an elastic polymer binder wherein the dry-electrode film is free standing and comprises at most an insubstantial amount of polytetrafluoroethylene. US 2020/0313193 mainly discloses polyethylene, as elastic polymer binder, which is not electrochemically stable enough for use in both cathode and anode of the lithium-ion secondary batteries.

Therefore, there is still a need to develop new electrode compositions for Li-ion batteries that are suitable for processing without the use of organic solvents.

### Summary of the invention

In a first aspect, the present invention provides a dry composition comprising at least one active material, at least one binder, optionally at least one conductive agent, characterized in that said composition further comprises carbon fibers having a diameter greater than or equal to 100 nm and a length greater than or equal to 5 µm.

By adding carbon fibers in the formulation as specified above, the dry-coated electrodes have higher strength at break than electrodes without carbon fibers. Thus, the electrodes are tougher and easier to handle. The composition is a dry composition, i.e. does not comprise solvent. The composition is prepared in absence of solvent. The active material, the binder, the carbon fibers and optionally the conductive agents are dry mixed. The carbon fibers and said at least one active material are two different components of the composition.

In a preferred embodiment, said dry composition comprises at least 2% by weight of said carbon fibers based on the total weight of the composition and preferably less than 30% by weight of said carbon fibers based on the total weight of said composition.

In a preferred embodiment, said carbon fibers have a ratio length/diameter greater than 2, preferably the ratio is of from 2 to 50.

In a preferred embodiment, said at least one binder comprises a fluorinated polymer **P1** comprising recurring units derived from a monomer selected from the group consisting of vinylidene fluoride, vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

In a preferred embodiment, said at least one binder comprises a fluorinated polymer **P1** selected from the group consisting of homopolymers of vinylidene fluoride and copolymers of vinylidene fluoride and at least one comonomer **M1** selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

In a preferred embodiment, said at least one binder comprises a fluorinated polymer **P1** comprising recurring units derived from a monomer **M2** selected from the group consisting of acrylic acid, methacrylic acid, vinyl sulfonic acid, vinyl phosphonic acid, itaconic acid, maleic acid, and salts of such compounds; allyl glycidyl ether, methallyl glycidyl ether, crotonic acid glycidyl ether, and acetic acid glycidyl ether; ethylene carbonate; hydroxyl ethyl acrylate and hydroxyl propyl acrylate.

In a preferred embodiment, said at least one binder comprises a non-fluorinated polymer **P1'** selected from the group consisting of hydrophilic polymer **P2** comprises at least recurring units derived from at least one monomer **M2** of formula R¹R²C=C(R³)C(O)R (I) wherein R¹, R² and R³ are independently selected from the group consisting of H and C₁-C₅ alkyl; R is selected from the group consisting of-NHC(CH₃)₂CH₂C(O)CH₃, -NR'R" or -OR' wherein R' and R" are independently selected from the group consisting of H and C₁-C₁₈ alkyl groups optionally substituted by one or more hydroxyl, thiol or amino functional group(s) or a five- to six-membered heterocycle comprising at least one nitrogen atom in the ring ; cellulose, polyolefin, polyether, polysiloxane, polyamide, polyamide-imide (PAI), poly(acrylonitrile-co-styrene-co-butadiene) (ABS), poly(ethylene-co-vinylacetate), poly(styrene-co-acrylonitrile) (SAN), poly(styrene-co-maleic anhydride), poly(butadiene-co-acrylate), poly(butadiene-co-acrylic acid-co- acrylonitrile), Poly(ethylene-co-acrylates), polyesters of dialkyl phthalates, poly (vinyl chloride) (PVC), styrene-butadiene-styrene (SBS), styrene-isoprene-styrene (SIS), styrene-ethylene/propylene-styrene (SEPS), styrene-ethylene/butylene-styrene (SEBS), styrene butadiene rubber (SBR), ethylene propylene diene monomer (EPDM) rubber, polybutadiene (PBD), and polystyrene (PS); or mixtures thereof.

In a preferred embodiment, said at least one active material is selected from the group consisting of LiCoO₂, Li(Ni,Co,Al)O₂, Li₍ᵢ₊ₓ)NiₐMn_{b}Co_{c} (x represents a real number of 0 or more, a=0.8, 0.6, 0.5, or 1/3, b=0.1, 0.2, 0.3, or 1/3, c=0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₍₁₊ₓ₎Mn_{(2-x-y)}M_{y}O₄, wherein M represents at least one metal selected from Al, Mg, Co, Fe, Ni, and Zn, x and y independently representing a real number between 0 to 2, lithium titanate LiₓTiO_{y} wherein x and y independently representing a real number between 0 to 2, and a lithium metal phosphate having a composition represented by LiMPO₄, M representing Fe, Mn, Co, or Ni.

In a preferred embodiment, said at least one active material is selected from the group consisting of lithium alloy, a metal oxide, a carbon material such as graphite or hard carbon, silicon, a silicon alloy, and Li₄TiO₁₂.

In a preferred embodiment, the dry composition has the following mass composition:
a. 50% to 97,9% of said at least one active material, preferably 50% to 97%,
b. 0% to 25% of said at least one conductive agent, preferably 25% to 0.5%,
c. 0.1% to 25% of said at least one binder, preferably 25% to 0.5%,
d. 2% to 15% of said carbon fibers, preferably 2% to 10%,
e. 0% to 5% of at least an additive selected from the group consisting of plasticizer, ionic liquid, dispersing agent for conductive additive, and flowing aid agent;
the sum of all these percentages being 100%.

In another aspect, the present invention provides a dry-coated electrode comprising the dry composition according to the present invention coated on a substrate by a solventless process.

In another aspect, the present invention provides a Li-ion battery comprising a positive electrode, a negative electrode and a separator, wherein at least one of the electrodes is a dry-coated electrode according to the present invention.

### Detailed description of the invention

The invention is now described in more detail and in a nonlimiting way in the description which follows. According to various implementations, said binder comprises the following features, in combination where appropriate. The contents indicated are expressed by weight, unless otherwise indicated. For all the indicated ranges, the limits are included unless otherwise indicated.

In a first aspect, the present invention provides a composition for dry-coated electrode. The composition is suitable to prepare dry-coated electrode. The present composition comprises at least on active material, at least one binder, optionally at least one conductive agent. Furthermore, the composition according to the present invention comprises carbon fibers having a diameter greater than or equal to 100 nm and a length greater than or equal to 5 µm. As mentioned above, by adding carbon fibers in the composition as specified above, the dry-coated electrodes have higher strength at break than electrodes without carbon fibers.

In one embodiment, the composition comprises at least 2% by weight of said carbon fibers based on the total weight of the composition. In a preferred embodiment, the composition of the present invention comprises at least 2.1% by weight, advantageously at least 2.2% by weight, preferably at least 2.3% by weight, more preferably at least 2.4% by weight, most preferably at least 2.5% by weight, in particular at least 2.6% by weight, more particularly at least 2.7% by weight, most particularly at least 2.8% by weight of said carbon fibers based on the total weight of the composition.

In one embodiment, the composition comprises less than 20% by weight of said carbon fibers based on the total weight of the composition. In a preferred embodiment, the composition of the present invention comprises less than 19% by weight, advantageously less than 18% by weight, preferably less than 17% by weight, more preferably less than 16% by weight, most preferably less than 15% by weight, in particular less than 14% by weight, more particularly less than 13% by weight, most particularly less than 12% by weight of said carbon fibers based on the total weight of the composition.

In a preferred embodiment, the dry-coated electrode has the following mass composition:
a. 50% to 97,9% of said at least one active material, preferably 50% to 97%,
b. 0% to 25% of said at least one conductive agent, preferably 25% to 0.5%,
c. 0.1% to 25% of said at least one binder, preferably 25% to 0.5%,
d. 2% to 15% of said carbon fibers, preferably 2 to 10%,
e. 0% to 5% of at least an additive selected from the group consisting of plasticizer, ionic liquid, dispersing agent for conductive additive, and flowing aid agent;
the sum of all these percentages being 100%.

### Binder

As mentioned above, the composition of the present invention comprises at least one binder. Said binder comprises at least one fluorinated polymer **P1** or at least one non-fluorinated polymer **P1'** or a mixture thereof.

### Fluorinated polymer P1

In a preferred embodiment, said fluorinated polymer **P1** comprises recurring units derived from a monomer selected from the group consisting of vinylidene fluoride, vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

Preferably, said fluorinated polymer **P1** comprises recurring units derived from vinylidene fluoride (CH₂=CF₂). In a preferred embodiment, said fluorinated polymer **P1** is selected from the group consisting of polyvinylidene fluoride homopolymers and copolymers based on polyvinylidene fluoride comprising at least one comonomer **M1** compatible with vinylidene fluoride. The comonomers compatible with vinylidene fluoride can be halogenated (fluorinated, chlorinated or brominated) or non-halogenated.

In a preferred embodiment, said fluorinated polymer **P1** is selected from the group consisting of homopolymers of vinylidene fluoride.

In another preferred embodiment, said fluorinated polymer **P1** is a copolymer of vinylidene fluoride and at least one comonomer **M1** selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

Examples of trifluoropropenes is in particular 3,3,3-trifluoropropene. Tetrafluoropropenes may be for example 2,3,3,3-tetrafluoropropene or 1,3,3,3-tetrafluoropropene. Pentafluoropropenes may be for example 1,1,3,3,3-pentafluoropropene or 1,2,3,3,3-pentafluoropropene. Perfluoroalkyl vinyl ethers are for example those of general formula Rf-O-CF=CF2, Rf being an alkyl group, preferably a C1 to C4 alkyl group (preferred examples being perfluoropropyl vinyl ether and perfluoromethyl vinyl ether). Chlorofluoroethylene can denote either 1-chloro-1-fluoroethylene or 1-chloro-2-fluoroethylene. The 1-chloro-1-fluoroethylene isomer is preferred. Chlorotrifluoropropene is preferably 1-chloro-3,3,3-trifluoropropene or 2-chloro-3,3,3-trifluoropropene.

Said at least one comonomer **M1** may be selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers such as perfluoro(methyl vinyl)ether (PMVE), perfluoro(ethylvinyl) ether and perfluoro(propyl vinyl) ether, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propene or mixtures thereof.

Said at least one comonomer **M1** may be selected from the group consisting of vinyl fluoride, tetrafluoroethylene, hexafluoropropylene, 3,3,3-trifluoropropene, 2,3,3,3-tetrafluoropropene, 1,3,3,3-tetrafluoropropene, hexafluoroisobutylene, perfluorobutylethylene, 1,1,3,3,3-pentafluoropropene, 1,2,3,3,3-pentafluoropropene, perfluoro(propylvinyl ether), perfluoro(methyl vinyl ether), perfluoro(ethylvinyl ether), trifluoroéthylène, bromotrifluoroethylene, chlorofluoroethylene, chlorotrifluoroethylene, chlorotrifluoropropene, ethylene and mixtures thereof.

Said fluorinated polymer **P1** may also comprise non-halogenated monomers such as ethylene and/or acrylic or methacrylic acid comonomers.

Said fluorinated polymer **P1** may contain at least 50 mol% of vinylidene fluoride, advantageously at least 60 mol% of vinylidene fluoride, preferably at least 70 mol% of vinylidene fluoride, more preferably at least 80 mol% of vinylidene fluoride, in particular at least 90 mol% of vinylidene fluoride. Preferably, said fluorinated polymer **P1** may contain less than 25 mol% of said at least one comonomer **M1,** advantageously less than 20 mol% of said at least one comonomer **M1,** preferably less than 15 mol% of said at least one comonomer **M1,** more preferably less than 10 mol% of said at least one comonomer **M1,** in particular less than 5 mol% of said at least one comonomer **M1.** Preferably, said fluorinated polymer **P1** has a molar content in said at least one comonomer **M1** greater than 0,5 mol%, preferably greater than 1 mol%.

In a more specific embodiment, said fluorinated polymer **P1** comprise vinylidene fluoride recurring units and recurring units derived from said at least one comonomer **M1** compatible with vinylidene fluoride, said at least one comonomer **M1** being hexafluoropropylene. Preferably, said polymer **P1** may contain less than 25 mol% of hexafluoropropylene, advantageously less than 20 mol% of hexafluoropropylene, preferably less than 15 mol% of hexafluoropropylene, more preferably less than 10 mol% of hexafluoropropylene, in particular less than 5 mol% of hexafluoropropylene; and greater than 0,5 mol% of hexafluoropropylene, preferably greater than 1 mol% of hexafluoropropylene.

In a preferred embodiment, said fluorinated polymer **P1** is a copolymer of vinylidene fluoride and tetrafluoroethylene. Preferably, said fluorinated polymer **P1** may contain less than 25 mol% of tetrafluoroethylene, advantageously less than 20 mol% of tetrafluoroethylene, preferably less than 15 mol% of tetrafluoroethylene, more preferably less than 10 mol% of tetrafluoroethylene, in particular less than 5 mol% of tetrafluoroethylene; and greater than 0,5 mol% of tetrafluoroethylene, preferably greater than 1 mol% of tetrafluoroethylene.

In a preferred embodiment, said fluorinated polymer **P1** is a copolymer of vinylidene fluoride and chlorotrifluoroethylene. Preferably, said fluorinated polymer **P1** may contain less than 25 mol% of chlorotrifluoroethylene, advantageously less than 20 mol% of chlorotrifluoroethylene, preferably less than 15 mol% of chlorotrifluoroethylene, more preferably less than 10 mol% of chlorotrifluoroethylene, in particular less than 5 mol% of chlorotrifluoroethylene; and greater than 0,5 mol% of chlorotrifluoroethylene, preferably greater than 1 mol% of chlorotrifluoroethylene.

In a preferred embodiment, said fluorinated polymer **P1** is a terpolymer of vinylidene fluoride, hexafluoropropylene and tetrafluoroethylene.

In one embodiment, said fluorinated polymer **P1** may comprise monomer units bearing at least one of the following functions: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. The function is introduced by a chemical reaction which can be grafting or a copolymerization of the fluoromonomer with a monomer bearing at least one of said functional groups and a vinyl function capable copolymerizing with the fluoromonomer, according to techniques well known to a person skilled in the art. According to one embodiment, said fluorinated polymer **P1** may comprise recurring units bearing a carboxylic acid function which is a group of (meth)acrylic acid type chosen from acrylic acid, methacrylic acid, hydroxyethyl (meth)acrylate, hydroxypropyl (meth)acrylate and hydroxyethylhexyl (meth)acrylate.

According to one embodiment, the units bearing the carboxylic acid function may additionally comprise a heteroatom chosen from oxygen, sulfur, nitrogen and phosphorus.

According to one embodiment, the functionality is introduced by means of the transfer agent used during the synthesis process. The transfer agent is a polymer of molar mass less than or equal to 20 000 g/mol and bearing functional groups chosen from the groups: carboxylic acid, carboxylic acid anhydride, carboxylic acid ester, epoxy groups (such as glycidyl), amide, hydroxyl, carbonyl, mercapto, sulfide, oxazoline, phenolic, ester, ether, siloxane, sulfonic, sulfuric, phosphoric or phosphonic. One example of a transfer agent of this type is oligomers of acrylic acid. According to a preferred embodiment, the transfer agent is an oligomer of acrylic acid of molar mass less than or equal to 20 000 g/mol.

The content of functional groups of the fluorinated polymer **P1** is at least 0.01 mol%, preferably at least 0.1 mol%, and at most 15 mol%, preferably at most 10 mol%.

In a particular embodiment, said fluorinated polymer **P1** is a homopolymer of vinylidene fluoride or said fluorinated polymer **P1** comprises recurring units derived from vinylidene fluoride and recurring units bearing a carboxylic acid function which is a group of (meth)acrylic acid type chosen from acrylic acid, methacrylic acid, hydroxyethyl (meth)acrylate, hydroxypropyl (meth)acrylate and hydroxyethylhexyl (meth)acrylate.

In a preferred embodiment, the fluorinated polymer **P1** preferably has melt viscosity of greater than 5 Pa.s, preferably of greater than 10 Pa.s, more preferably of greater than 15 Pa.s, according to the ASTM D-3835 method, measured at 232°C and 100 sec-1. Preferably, the fluorinated polymer **P1** has a melt viscosity lower than 300 Pa.s, preferably lower than 250 Pa.s, more preferably lower than 200 Pa.s, in particular lower than 150 Pa.s according to the ASTM D-3835 method, measured at 232°C and 100 sec-1.

The fluorinated polymer **P1** used in the invention can be obtained by known polymerization methods, such as emulsion or suspension polymerization. According to one embodiment, they are prepared by an emulsion polymerization process in the absence of a fluorinated surfactant.

The polymerization of the fluorinated polymer **P1** results in a latex generally having a solids content of from 10% to 60% by weight, preferably from 10% to 50%, and having a volume-average particle size of less than 1 micrometer, preferably less than 1000 nm, preferably of less than 800 nm and more preferably of less than 600 nm. The volume-average size of the particles is generally at least 20 nm, preferably at least 50 nm, and advantageously the average size is within the range from 100 to 400 nm. The polymer particles can form agglomerates, the volume-average size of which is from 1 to 30 micrometers and preferably from 2 to 10 micrometers. Nicomp CW380 Particle Size Analyzer (light scattering) is used to measure the volume average particle size of the latex particles. The agglomerates can break up into discrete particles during the formulation and the application to a substrate.

According to some embodiments, the fluorinated polymer **P1** (homopolymer or copolymers) are composed of biobased vinylidene fluoride. The term "biobased" means "resulting from biomass". This makes it possible to improve the ecological footprint of the membrane. Biobased vinylidene fluoride can be characterized by a content of renewable carbon, that is to say of carbon of natural origin and originating from a biomaterial or from biomass, of at least 1 atom%, as determined by the content of 14C according to Standard NF EN 16640. The term "renewable carbon" indicates that the carbon is of natural origin and originates from a biomaterial (or from biomass), as indicated below. According to some embodiments, the biocarbon content of the VDF can be greater than 5%, preferably greater than 10%, preferably greater than 25%, preferably greater than or equal to 33%, preferably greater than 50%, preferably greater than or equal to 66%, preferably greater than 75%, preferably greater than 90%, preferably greater than 95%, preferably greater than 98%, preferably greater than 99%, advantageously equal to 100%.

Said at least one binder may further be a mixture of various fluorinated polymers **P1.** Alternatively, said at least one binder may comprise a fluorinated polymer **P1** and a hydrophilic polymer **P2.** Said hydrophilic polymer **P2** comprises at least recurring units derived from at least one monomer **M2** of formula R¹R²C=C(R³)C(O)R (I) wherein R¹, R² and R³ are independently selected from the group consisting of H and C₁-C₅ alkyl ; R is selected from the group consisting of - NHC(CH₃)₂CH₂C(O)CH₃, -NR'R" or -OR' wherein R' and R" are independently selected from the group consisting of H and C₁-C₁₈ alkyl groups optionally substituted by one or more hydroxyl, thiol or amino functional group(s) or a five- to six-membered heterocycle comprising at least one nitrogen atom in the ring.

In a preferred embodiment, said monomer **M2** is of formula R¹R²C=C(R³)C(O)R (I) wherein R¹, R² and R³ are independently selected from the group consisting of H and C₁-C₅ alkyl; R is selected from the group consisting of -NHC(CH₃)₂CH₂C(O)CH₃, -NR'R" or -OR' wherein R' and R" are independently selected from the group consisting of H and C₁-C₁₅ alkyl optionally substituted by one or more hydroxyl, thiol or amino functional group(s) or a five- to six-membered heterocycle comprising at least nitrogen atom in the ring.

In a preferred embodiment, said monomer **M2** is of formula R¹R²C=C(R³)C(O)R (I) wherein R¹, R² and R³ are independently selected from the group consisting of H and C₁-C₅ alkyl; R is selected from the group consisting of -NHC(CH₃)₂CH₂C(O)CH₃, -NR'R" or -OR' wherein R' and R" are independently selected from the group consisting of H and C₁-C₁₀ alkyl optionally substituted by one or more hydroxyl, thiol or amino functional group(s) or a five- to six-membered heterocycle comprising at least nitrogen atom in the ring.

In a preferred embodiment, said monomer **M2** is of formula R¹R²C=C(R³)C(O)R (I) wherein R¹, R² and R³ are independently selected from the group consisting of H and C₁-C₅ alkyl; R is selected from the group consisting of -OR' wherein R' is selected from the group consisting of H and C₁-C₁₀ alkyl optionally substituted by one or more -OH functional group(s).

In a preferred embodiment, said monomer **M2** is of formula R¹R²C=C(R³)C(O)R (I) wherein R¹, R² and R³ are independently selected from the group consisting of H and C₁-C₃ alkyl; R is selected from the group consisting of -OR' wherein R' is selected from the group consisting of H and C₁-C₁₀ alkyl optionally substituted by one or more -OH functional group(s).

In a more preferred embodiment, said monomer **M2** is of formula R¹R²C=C(R³)C(O)R (I) wherein R¹, R² and R³ are independently selected from the group consisting of H and C₁-C₃ alkyl; R is selected from the group consisting of -OR' wherein R' is selected from the group consisting of H and C₁-C₅ alkyl optionally substituted by one or more -OH functional group(s).

In a preferred embodiment, said hydrophilic polymer **P2** comprises at least recurring units derived from at least one monomer **M2** selected from the group consisting of acrylic acid, methacrylic acid, methyl acrylate, methyl methacrylate, ethyl acrylate, propyl acrylate, n-butyl acrylate, isobutyl acrylate, t-butyl acrylate, n-dodecyl acrylate, amyl acrylate, isoamyl acrylate, hexyl acrylate, 2-ethylhexyl acrylate, diacetone acrylamide, lauryl acrylate, n-octyl acrylate, ethyl methacrylate, propyl methacrylate, n-butyl methacrylate, isobutyl methacrylate, t-butyl methacrylate, n-dodecyl methacrylate, amyl methacrylate, isoamyl methacrylate, hexyl methacrylate, 2-ethylhexyl methacrylate, lauryl methacrylate, n-octyl methacrylate, 2-hydroxyethyl methacrylate, 2-hydroxypropyl acrylate, 4-hydroxybutyl methacrylate, and combinations thereof. Among these, alkyl acrylates with an alkyl group having from 1 to 8 carbon atoms are preferred, and alkyl acrylates with an alkyl group having from 1 to 5 carbon atoms are more preferable. These compounds may be used alone or as a mixture of two or more. In a more preferred embodiment, said hydrophilic polymer **P2** comprises at least recurring units derived from at least one monomer **M2** selected from the group consisting of acrylic acid, methacrylic acid, methyl acrylate, methyl methacrylate, ethyl acrylate, propyl acrylate, n-butyl acrylate, isobutyl acrylate, t-butyl acrylate, amyl acrylate, isoamyl acrylate, ethyl methacrylate, propyl methacrylate, n-butyl methacrylate, isobutyl methacrylate, t-butyl methacrylate, amyl methacrylate, isoamyl methacrylate, 2-hydroxyethyl methacrylate, 2-hydroxypropyl acrylate, 4-hydroxybutyl methacrylate, and combinations thereof ; in particular selected from the group consisting of acrylic acid, methacrylic acid, methyl acrylate, methyl methacrylate, ethyl acrylate, propyl acrylate, ethyl methacrylate, propyl methacrylate, 2-hydroxyethyl methacrylate, 2-hydroxypropyl acrylate, 4-hydroxybutyl methacrylate, and combinations thereof.

In a preferred embodiment, the weight average molecular weight Mw of said hydrophilic polymer **P2** is greater than 30000 g/mol, advantageously greater than 40000 g/mol, preferably greater than 50000 g/mol, more preferably greater than 65000 g/mol, in particular greater than 80000 g/mol, more particularly greater than 100000 g/mol.

Said hydrophilic polymer **P2** may also contain recurring units derived from monomers **M3** copolymerizable with said monomer **M2.** Said monomer **M2** may be:
- (A) an alkenyl compound containing a functional group, or
- (B) an alkenyl compound without a functional group; or mixtures thereof.

The alkenyl compound (A) containing a functional group comprises, for example, α,β-unsaturated carboxylic acids such as acrylic acid, methacrylic acid, fumaric acid, crotonic acid, itaconic acid and the like; vinyl ester compounds such as vinyl acetate, vinyl neodecanoate and the like; amide compounds such as acrylamide, methacrylamide, N-methylacrylamide, N-methylmethacrylamide, N-methylolacrylamide, N-methylolmethacrylamide, N-alkylacrylamide, N-alkylmethacrylamide, N,N-dialkylacrylamide, N,N-dialkylmethacrylamide, diacetone acrylamide and the like; acrylic acid esters such as 2-hydroxyethyl acrylate, N-dialkylaminoethyl acrylate, glycidyl acrylate, n-dodecyl acrylate, fluoroalkyl acrylate and the like; methacrylic acid esters such as dialkylaminoethyl methacrylate, fluoroalkyl methacrylate, 2-hydroxyethyl methacrylate, n-octyl methacrylate, t-butyl methacrylate, glycidyl methacrylate, ethylene glycol dimethacrylate and the like; maleic anhydride, and alkenyl glycidyl ether compounds such as allyl glycidyl ether and the like. Among these, preference is given to acrylic acid, methacrylic acid, itaconic acid, fumaric acid, N-methylolacrylamide, N-methylolmethacrylamide, diacetone acrylamide, 2-hydroxyethyl acrylate, 2-hydroxyethyl methacrylate and allyl glycidyl ether. These compounds may be used alone or as a mixture of two or more.

The alkenyl compound without functional group (B) comprises, for example, conjugated dienes such as 1,3-butadiene, isoprene and the like; divinyl hydrocarbon compounds such as divinylbenzene and the like; and alkenyl cyanides such as acrylonitrile, methacrylonitrile and the like. Among these, 1,3-butadiene and acrylonitrile are preferred. These compounds may be used alone or as a mixture of two or more.

It is preferable for the functional alkenyl compound (A) to be used in a proportion of less than 50% by weight relative to the weight of the mixture of monomers and for the alkenyl compound without functional group (B) to be used in a proportion of less than 30% by weight relative to the weight of the mixture of monomers.

According to a preferred embodiment, the binder composition is provided in non-cross-linked form. In an alternative embodiment, the binder composition, as described herein, may undergo crosslinking either by self-condensation of its functional groups or by reaction with a catalyst and/or a crosslinking agent, such as melamine resins, epoxy resins and the like, and also known crosslinking agents of low molecular weight such as di- or higher polyisocyanates, polyaziridines, polycarbodiimides, polyoxazolines, dialdehydes such as glyoxal, acetoacetates, malonates, acetals, di- and trifunctional acrylates and thiols, cycloaliphatic epoxy molecules, organosilanes such as epoxysilanes and aminosilanes, carbamates, diamines and triamines, inorganic chelating agents such as certain zinc and zirconium salts, titaniums, glycourils and other aminoplasts. In certain cases, functional groups originating from other polymerization ingredients, such as surfactants, initiators, seed particles, may be involved in the crosslinking reaction. When two or more functional groups are involved in the crosslinking process, the pairs of complementary reactive groups are, for example, hydroxyl-isocyanate, acid-epoxy, amine-epoxy, hydroxyl-melamine, acetoacetate-acid. The monomers not containing functional groups capable of entering into crosslinking reactions after the polymerization should preferably represent 70% or more by weight of the total mixture of monomers and, more preferably, should be greater than 90% by weight. According to one embodiment, the binder composition comprises a crosslinking agent chosen from the group consisting of isocyanates, diamines, adipic acid, dihydrazides, and combinations thereof.

If the binder is a mixture of a fluorinated polymer **P1** and a hydrophilic polymer **P2,** the **P1/P2** mass ratio may vary from 99/1 to 5/95, preferably from 95/5 to 50/50, advantageously from 95/5 to 60/40.

In a preferred embodiment, said at least one binder has a solution viscosity (9 wt% in NMP) lower than 15000 cP measured at 3.36s-1 on a Brookfield DVII viscometer with a SC24-25 spindle at 25°C. Advantageously, said binder composition has a 9 wt% solution viscosity in NMP lower than 14000 cP, preferably lower than 13000 cP, more preferably lower than 12000 cP, in particular lower than 11000 cP measured at 3.36s⁻¹ on a Brookfield DVII viscometer with a SC24-25 spindle at 25°C.

If the binder is a mixture of a fluorinated polymer **P1** and a hydrophilic polymer **P2** or a mixture of various fluorinated polymer **P1,** said at least one binder may be prepared by mixing the corresponding polymers **P1** or **P2** in a latex form or in a powder form. If the fluorinated polymer is in a latex form, a drying is carried out to form a powder before the mixing with the other components of the dry composition.

### Non-fluorinated polymer P1'

The non-fluorinated polymer **P1'** can be the hydrophilic polymer **P2** as disclosed above.

The non-fluorinated polymer **P1'** can be polyolefins and/or co-polymers thereof. In some embodiments, the non-fluorinated polymer **P1'** may comprise one or more of cellulose, polyolefin, polyether, polysiloxane, co-polymers thereof, and/or admixtures thereof. In some embodiments, the one or more polyolefins can include polyethylene (PE), polypropylene (PP) co-polymers thereof, and/or mixtures thereof. In some embodiments, the non-fluorinated polymer **P1'** may comprise branched polyethers, polyvinyl ethers, co-polymers thereof, and/or the like. The non-fluorinated polymer **P1'** may comprise co-polymers of polysiloxanes and polysiloxane, and/or co-polymers of polyether precursors. For example, the non-fluorinated polymer **P1'** may comprise poly(ethylene oxide) (PEO), poly(phenylene oxide) (PPO), polyethylene-block-poly(ethylene glycol), polydimethylsiloxane (PDMS), polydimethylsiloxane-coalkylmethylsiloxane, co-polymers thereof, and/or admixtures thereof. In some embodiments, the one or more polyolefins can include polyethylene (PE), polypropylene (PP), polyvinylidene fluoride (PVDF), co-polymers thereof, and/or mixtures thereof. The binder can include a cellulose, for example, carboxymethylcellulose (CMC). For example, in some embodiments, the non-fluorinated polymer **P1'** may comprise a binder selected from at least one of PE and PEO. In some embodiments, the elastic polymer binder may consist or consist essentially of PE. In some embodiments, the non-fluorinated polymer **P1'** may consist or consist essentially of PEO.

In another embodiment, the non-fluorinated polymer **P1'** can be a polyamide or polyamide-imide (PAI). In another embodiment, the non-fluorinated polymer **P1'** may also be poly(acrylonitrile-co-styrene-co-butadiene) (ABS), poly(ethylene-co-vinylacetate), poly(styrene-co-acrylonitrile) (SAN), poly(styrene-co-maleic anhydride), poly(butadiene-co-acrylate), poly(butadiene-co-acrylic acid-co-acrylonitrile), Poly(ethylene-co-acrylates), polyesters of dialkyl phthalates, or poly (vinyl chloride) (PVC). In another embodiment, the non-fluorinated polymer **P1'** may also be styrene-butadiene-styrene (SBS), styrene-isoprene-styrene (SIS), styrene-ethylene/propylene-styrene (SEPS), styrene-ethylene/butylene-styrene (SEBS), styrene butadiene rubber (SBR), ethylene propylene diene monomer (EPDM) rubber, polybutadiene (PBD), and polystyrene (PS).

### Active materials

Said composition comprises at least one active material.

If the electrode to be prepared is a negative electrode, said active material may be selected from the group consisting of lithium alloy, a metal oxide, a carbon material such as graphite or hard carbon, silicon, a silicon alloy, and Li₄TiO₁₂.

Alternatively, if the electrode to be prepared is a positive electrode, said active material may be selected from the group consisting of LiCoO₂, Li(Ni,Co,Al)O₂, Li₍₁₊ₓ₎NiₐMn_{b}Co_{c} (x represents a real number of 0 or more, a=0.8, 0.6, 0.5, or 1/3, b=0.1, 0.2, 0.3, or 1/3, c=0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₍₁₊ₓ₎Mn_{(2-x-y)}M_{y}O₄, wherein M represents at least one metal selected from Al, Mg, Co, Fe, Ni, and Zn, x and y independently representing a real number between 0 to 2, lithium titanate LiₓTiO_{y} wherein x and y independently representing a real number between 0 to 2, and a lithium metal phosphate having a composition represented by LiMPO₄, M representing Fe, Mn, Co, or Ni.

In addition, the surface of each of the above-described materials may be coated. The coating material is not particularly limited as long as it has lithium-ion conductivity and contains a material capable of being maintained in the form of a coating layer on the surface of the active material. Examples of the coating material include LiNbO₃, Li₄Ti₅O₁₂, and Li₃PO₄.

The shape of the active material is not particularly limited but is preferably particulate.

### Conductive agents

Said composition may optionally comprise at least one conductive additive. The conductive additives comprise of one or more material that can improve conductivity. Some examples include carbon blacks such as acetylene black, Ketjen black; carbon fibers such as carbon nanotube, carbon nanofiber, vapor growth carbon fiber; metal powders such as SUS powder, and aluminum powder.

### Carbon fibers

In the composition of the present invention, carbon fibers are incorporated as mentioned above. In a preferred embodiment, said carbon fibers have a ratio length/diameter greater than 2, preferably the ratio is of from 2 to 1000, advantageously from 2 to 750, preferably from 2 to 500, more preferably from 2 to 250, most preferably from 2 to 100, in particular from 2 to 75, more particularly from 2 to 50.

Using a scanning electron microscope, diameters of 100 or more fibers were measured by a magnification of 20 k times and an average of the diameters was adopted as a fiber diameter. In one embodiment, said carbon fibers have a diameter greater than or equal to 100 nm. In a preferred embodiment, said carbon fibers have a diameter greater than or equal to 250 nm, advantageously greater than or equal to 500 nm, preferably greater than or equal to 750 nm, more preferably greater than or equal to 1000 nm, most preferably greater than or equal to 1500 nm, in particular greater than or equal to 2000 nm, more particularly greater than or equal to 2500 nm, most particularly greater than or equal to 3000 nm. In a preferred embodiment, said carbon fibers have a diameter lower than 50 µm, advantageously lower than 45 µm, preferably lower than 40 µm, more preferably lower than 30 µm, most preferably lower than 25 µm, in particular lower than 20 µm, more particularly lower than 15 µm, most particularly lower than 10 µm.

Using a scanning electron microscope, photographs of the fiber were panoramatically taken at a magnification of 10 k or more times to prepare the visual field which enables the measurement of both ends of the fiber. The lengths of 100 or more fibers were measured and the average thereof was adopted as a fiber length. In one embodiment, said carbon fibers have a length greater than or equal to 5 µm. In a preferred embodiment, said carbon fibers have a length greater than or equal to 6 µm, advantageously greater than or equal to 7 µm, preferably greater than or equal to 8 µm, more preferably greater than or equal to 9 µm, most preferably greater than or equal to 10 µm, in particular greater than or equal to 11 µm, more particularly greater than or equal to 12 µm, most particularly greater than or equal to 13 µm. In a preferred embodiment, said carbon fibers have a length lower than 50 mm, advantageously lower than 25 mm, preferably lower than 20 mm, more preferably lower than 10 mm, most preferably lower than 5 mm, in particular lower than 1 mm, more particularly lower than 0.5 mm, most particularly lower than 0.2 mm.

### Dry-coated electrode and uses thereof

The composition of the present invention is used to prepare an electrode, preferably via a solventless process. Said composition of the present invention is coated on a substrate. The substrate is preferably a current collector.

Said process for preparing the dry-coated electrode comprises the following steps:
- mixing the active material, the binder of the present invention in powder form, and the conductive agent using a process that provides an electrode formulation applicable to a metal substrate by a "solventless" process;
- depositing said electrode formulation on a substrate by a solventless process to obtain a Li-ion battery electrode, and
- consolidation of said electrode by thermo-mechanical treatment carried out at a temperature ranging from 50°C below the melting temperature of the binder up to 50°C above the melting temperature of the binder; or
- consolidation of said electrode by thermo-mechanical treatment carried out at a temperature ranging from 50°C below the melting temperature of the binder up to 50°C above the glass transition temperature of the binder if the binder comprises a hydrophilic polymer **P2** as defined above and said glass transition temperature of said hydrophilic polymer **P2** is greater than the melting temperature of fluorinated polymer **P1;** or
- consolidation of said electrode by thermo-mechanical treatment carried out at a temperature ranging from 50°C below the glass transition temperature of the binder up to 50°C above the melting temperature of the binder if the binder comprises a hydrophilic polymer **P2** as defined above and said glass transition temperature of said hydrophilic polymer **P2** is lower than the melting temperature of the fluorinated polymer **P1.**

A "solventless" process is one that does not require a residual solvent evaporation step after the deposition step.

A thermo-mechanical treatment refers to the application of a temperature from 50°C below the melting temperature of the binder up to 50°C above the melting temperature of the binder, with mechanical pressure. The pressure applied during the thermo-mechanical treatment is generally lower than 1 kN/mm, preferably lower than 0.75 kN/mm, more preferably lower than 0.5 kN/mm. Such thermo-mechanical treatment can be done by for example a calendaring machine with heatable rolls or a plate-plate press which can also be heated as well.

According to an embodiment, after the powder-mixing step, the electrode is manufactured by a solventless spraying process, by depositing the formulation on the metallic substrate, by a pneumatic spraying process, by electrostatic spraying, by dipping in a fluidized powder bed, by sprinkling, by electrostatic screen printing, by deposition with rotative brushes, by deposition with dosing rotative rolls, by calendering.

According to one embodiment, after the powder mixing step, the electrode is manufactured by a solvent-less process in two steps. A first step consists in manufacturing a free-standing film from the pre-mixed formulation with a thermo-mechanical process like extrusion, calendering or thermo-compression. In a second step, the free-standing film is laminated onto the metallic substrate by a process combining temperature and pressure like calendering or thermo-compression.

The mass ratio of conductive agents with respect to the active material is preferably from 0 to 10 %, more preferably from 0 to 7 %.

The mass ratio of binder with respect to the active material is preferably from 0.1 to 10 %, more preferably from 0.5 to 7 %.

According to an embodiment, the electrode components are all mixed at once according to conventional methods, leading to an electrode formulation.

In one embodiment, said electrode formulation is applied to a substrate by electrostatic screen printing. Some examples of substrate are current collectors such as metal foil and metal mesh, polymer films, or solid electrolyte layer of a solid-state battery.

The preferred thickness of an electrode is from 0.1 µm to 1000 µm, preferably from 0.1 µm to 300 µm.

In another aspect, the present invention provides a Li-ion battery. Said Li-ion battery comprises a positive electrode, a negative electrode and a separator, wherein at least one of the electrodes is a dry-coated electrode according to the present invention.

### Examples

### Example 1

18.5 g of 158-C (graphite, BTR), 0.5 g of Torayca(R) MLD-30 (7 µm diameter, 30 µm length), and 1 g of Kynar Flex(R) LBG were added to a 100 ml plastic bottle with lid. The ratio of 158-C, carbon fiber, and binder was 92.5/2.5/5 by weight. The powder was mixed by ARE-310(Thinky) in a cycle of 2000 rpm x 5 min. then 1 min. rest at r.t. for total of 5 times. The mixed powder was sandwiched between two copper foils. The copper foil and powder were compressed in a roll press (SA-602, TESTER SANGYO CO., LTD.) at 160°C, 0.5 m/min. speed to reach 100 um thickness. The prepared electrodes were cut into 1 cm x 4 cm rectangular shape. The tensile strength of the cut electrodes were measured by EZ-TEST(Shimadzu) using a 500 N load at 1 mm/min. speed. Tensile modulus was calculated from values between 0.5~0.75 % strain). Break Stress and Break Stroke Strain was measured at the point of electrode breakage. Results are in table 1.

### Example 2

The same process as in Example 1 was taken except the formulation was changed to 18 g of 158-C (graphite, BTR), 1 g of Torayca(R) MLD-30 (7 µm diameter, 30 µm length), and 1 g of Kynar Flex(R) LBG. Tensile measurement results are given in table 1.

### Comparative example

The same process as in Example 1 was taken except the formulation was changed to 19 g of 158-C (graphite, BTR) and 1 g of Kynar Flex(R) LBG. Tensile measurement results are given in table 1.

**[Table 1]**

| | Carbon fiber content (%) | Modulus (MPa) Break Stress (MPa) | Break Stroke Strain (%) |
|---|---|---|---|
| Example 1 | 2.5 | 174 | 3.3 |
| Example 2 | 5 | 209 | 3.3 |
| Comparative example 1 | 0 | 169 | 2.4 |

As demonstrated in the present examples, the compositions according to the present invention have improved mechanical properties than compositions without carbon fibers. The compositions of the present invention are easier to handle. Furthermore, it has been observed that the improved properties are not observed with less than 2% of carbon fibers or with carbon fibers having a diameter or a length outside the range mentioned in the present invention.

## Claims

1. Dry composition comprising at least one active material, at least one binder, optionally at least one conductive agent, **characterized in that** said composition further comprises carbon fibers having a diameter greater than or equal to 100 nm and a length greater than or equal to 5 µm.

2. Dry composition according to the previous claim wherein said composition comprises at least 2% by weight of said carbon fibers based on the total weight of said composition and preferably less than 30% by weight of said carbon fibers based on the total weight of said composition.

3. Dry composition according to any one of the previous claims wherein said carbon fibers have a ratio length/diameter greater than 2, preferably the ratio is of from 2 to 50.

4. Dry composition according to any one of the previous claims wherein said at least one binder comprises a fluorinated polymer **P1** comprising recurring units derived from a monomer selected from the group consisting of vinylidene fluoride, vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

5. Dry composition according to any one of the previous claims wherein said at least one binder comprises a fluorinated polymer **P1** selected from the group consisting of homopolymers of vinylidene fluoride and copolymers of vinylidene fluoride and at least one comonomer **M1** selected from the group consisting of vinyl fluoride, trifluoroethylene, chlorotrifluoroethylene, 1,2-difluoroethylene, tetrafluoroethylene, hexafluoropropylene, perfluoro(alkyl vinyl) ethers, perfluoro(1,3-dioxole), perfluoro(2,2-dimethyl-1,3-dioxole), monomers of formula CF₂=CFOCF₂CF(CF₃)OCF₂CF₂X wherein X is SO₂F, CO₂H, CH₂OH, CH₂OCN or CH₂OPO₃H, monomers of formula CF₂=CFOCF₂CF₂SO₂F, monomers of formula F(CF₂)nCH₂OCF=CF₂ wherein n is 1, 2, 3, 4 or 5, monomers of formula R¹CH₂OCF=CF₂ wherein R¹ is hydrogen or F(CF₂)m and m is 1, 2, 3 or 4; monomers of formula R²OCF=CH₂ wherein R² is F(CF₂)p and p is 1, 2, 3 or 4, perfluorobutylethylene, 3,3,3-trifluoropropene, tetrafluoropropene, hexafluoroisobutylene, perfluorobutylethylene, pentafluoropropene, bromotrifluoroethylene, chlorofluoroethylene, chlorotrifluoroethylene, chlorotrifluoropropene, ethylene and 2-trifluoromethyl-3,3,3-trifluoro-1-propène or mixtures thereof.

6. Dry composition according to any one of the previous claims wherein said at least one binder comprises a fluorinated polymer **P1** comprising recurring units derived from a monomer **M2** selected from the group consisting of acrylic acid, methacrylic acid, vinyl sulfonic acid, vinyl phosphonic acid, itaconic acid, maleic acid, and salts of such compounds; allyl glycidyl ether, methallyl glycidyl ether, crotonic acid glycidyl ether, and acetic acid glycidyl ether; ethylene carbonate; hydroxyl ethyl acrylate and hydroxyl propyl acrylate.

7. Dry composition according to any one of the previous claims wherein said at least one binder comprises a non-fluorinated polymer **P1'** selected from the group consisting of hydrophilic polymer **P2** comprises at least recurring units derived from at least one monomer **M2** of formula R¹R²C=C(R³)C(O)R (I) wherein R¹, R² and R³ are independently selected from the group consisting of H and C₁-C₅ alkyl ; R is selected from the group consisting of -NHC(CH₃)₂CH₂C(O)CH₃, -NR'R" or -OR' wherein R' and R" are independently selected from the group consisting of H and C₁-C₁₈ alkyl groups optionally substituted by one or more hydroxyl, thiol or amino functional group(s) or a five- to six-membered heterocycle comprising at least one nitrogen atom in the ring ; cellulose, polyolefin, polyether, polysiloxane, polyamide, polyamide-imide (PAI), poly(acrylonitrile-co-styrene-co-butadiene) (ABS), poly(ethylene-co-vinylacetate), poly(styrene-co-acrylonitrile) (SAN), poly(styrene-co-maleic anhydride), poly(butadiene-co-acrylate), poly(butadiene-co-acrylic acid-co-acrylonitrile), Poly(ethylene-co-acrylates), polyesters of dialkyl phthalates, poly (vinyl chloride) (PVC), styrene-butadiene-styrene (SBS), styrene-isoprene-styrene (SIS), styrene-ethylene/propylene-styrene (SEPS), styrene- ethylene/butylene-styrene (SEBS), styrene butadiene rubber (SBR), ethylene propylene diene monomer (EPDM) rubber, polybutadiene (PBD), and polystyrene (PS); or mixtures thereof.

8. Dry composition according to any one of the previous claims wherein said at least one active material is selected from the group consisting of LiCoOz, Li(Ni,Co,Al)O₂, Li₍₁₊ₓ₎NiₐMn_{b}Co_{c} (x represents a real number of 0 or more, a=0.8, 0.6, 0.5, or 1/3, b=0.1, 0.2, 0.3, or 1/3, c=0.1, 0.2, or 1/3), LiNiO₂, LiMn₂O₄, LiCoMnO₄, Li₃NiMn₃O₃, Li₃Fe₂(PO₄)₃, Li₃V₂(PO₄)₃, a different element-substituted Li Mn spinel having a composition represented by Li₍₁₊ₓ₎Mn_{(2-x-y)}M_{y}O₄, wherein M represents at least one metal selected from Al, Mg, Co, Fe, Ni, and Zn, x and y independently representing a real number between 0 to 2, lithium titanate LiₓTiO_{y} wherein x and y independently representing a real number between 0 to 2, and a lithium metal phosphate having a composition represented by LiMPO₄, M representing Fe, Mn, Co or Ni.

9. Dry composition according to any one of the previous claims wherein said at least one active material is selected from the group consisting of lithium alloy, a metal oxide, a carbon material such as graphite or hard carbon, silicon, a silicon alloy, and Li₄TiO₁₂.

10. Dry composition according to any one of the previous claims having the following mass composition:
a. 50% to 97,9% of said at least one active material, preferably 50% to 97%,
b. 0% to 25% of said at least one conductive agent, preferably 0.5% to 25%,
c. 0.1% to 25% of said at least one binder, preferably 0.5% to 25%,
d. 2% to 15% of said carbon fibers, preferably 2% to 10%,
e. 0% to 5% of at least an additive selected from the group consisting of plasticizer, ionic liquid, dispersing agent for conductive additive, and flowing aid agent;
the sum of all these percentages being 100%.

11. Dry-coated electrode comprising the dry composition according to any one of the previous claims coated on a substrate by a solventless process.

12. Li-ion battery comprising a positive electrode, a negative electrode and a separator, wherein at least one of the electrodes is a dry-coated electrode according to claim 11.
